# EUROPEAN PATENT SPECIFICATION

(11) **EP 1 084 821 B1**
(45) Date of publication and mention of the grant of the patent: **04.05.2005**
(21) Application number: 00308066.0
(22) Date of filing: 15.09.2000
(51) Int. Cl.: B32B 5/06, B32B 3/26, B30B 15/06, D04H 1/00

(54) **Heat resistant cushion material for forming press**
Hitzebeständiges Polstermaterial für Formpresse
Matériau de rembourrage résistant à la chaleur pour presse de formage

(30) Priority: 26.04.2000 JP 2000126627; 17.09.1999 JP 26317999
(43) Date of publication of application: 21.03.2001
(73) Proprietor: ICHIKAWA CO.,LTD., Tokyo (JP)
(72) Inventor: Oda, Hiroyuki, Kashiwa-shi, Chiba-ken (JP); Takamura, Hiroyuki, Nishi-Ibaragi-gun, Ibaragki-ken (JP); Takakura, Yoshimasa, Inba-gun, Chiba-ken (JP)
(74) Representative: Meddle, Alan Leonard

(56) References cited:
- EP-A- 0 582 207
- EP-A- 0 703 069
- EP-A- 0 718 429
- US-A- 4 461 800
- US-A- 4 836 871
- DATABASE WPI Section Ch, Week 199819 Derwent Publications Ltd., London, GB; Class A32, AN 1998-211565 XP002180845 & JP 10 058473 A (ICHIKAWA KEORI KK), 3 March 1998 (1998-03-03)
- DATABASE WPI Section Ch, Week 199324 Derwent Publications Ltd., London, GB; Class A32, AN 1993-191053 XP002180846 & JP 05 116161 A (ICHIKAWA KEORI KK), 14 May 1993 (1993-05-14)
- DATABASE WPI Section Ch, Week 199304 Derwent Publications Ltd., London, GB; Class A32, AN 1993-032727 XP002180847 & JP 04 361012 A (ICHIKAWA KEORI KK), 14 December 1992 (1992-12-14)
- DATABASE WPI Section Ch, Week 199117 Derwent Publications Ltd., London, GB; Class A28, AN 1991-120723 XP002180848 & JP 03 059157 A (ICHIKAWA KEORI KK), 14 March 1991 (1991-03-14)

## Description

### Summary of the Invention

This invention relates to a heat-resistant cushion material for use in forming a flat, plate-like sheet from a resin-containing prepreg. Examples of such sheets utilizing a synthetic resin as a principal component, include the paper-based phenolic resin laminates and glass/epoxy laminates used as printed circuit boards, and decorative laminated sheets of melamine resin, phenolic resin, etc., used as building materials.

Generally in the fabrication of paper-based phenolic resin laminates and glass/epoxy laminates for printed circuit boards, a heat-resistant cushion material is used. The cushion material has several important functions, including the uniform transfer of heat and pressure to the entire surface of the prepreg, and the avoidance of adverse effects due to protrusions, recesses, deformations and thickness variations in hot plates and mirror plates used in the fabrication process. In the operation of a hot press, when a prepreg is heated, the viscosity of its resin decreases so that it becomes liquid. Thereafter, curing proceeds gradually. A metal mirror plate is placed into contact with a surface of the prepreg sheet, and a cushion material is sandwiched between the hot plate and the mirror plate so that heat and pressure from the hot plate are transferred uniformly to the entire surface of the prepreg sheet.

In the prior art, the cushion material typically consisted of plural, stacked, sheets of kraft paper, the number of sheets in the stack depending on forming conditions. The pulp in the cushion was weakened by damage due to heat and pressure. In the case of severe conditions, the cushion could be used only once. Consequently, it was necessary to replace the kraft paper cushion material following each operation of the hot press. Moreover, it was necessary to count the kraft paper sheets to ensure that the required number of sheets was present to match the forming conditions. The operation was labor-intensive, as there was no way to place the kraft paper sheets in the press automatically. Moreover, it was necessary to maintain a large stock of kraft paper, and to store it in an air-conditioned storage space to avoid the adverse effects of atmospheric moisture. Thus, storage and moisture control required substantial time and labor. Another problem with the use of kraft paper sheets as cushion material was that paper particles tended to separate from the edges of the sheets and occasionally caused adverse effects on product quality.

For the reasons stated above, instead of kraft paper, various new cushion materials have been developed. These new materials can be used repeatedly, for up to several hundred operations, depending upon the forming conditions. The new cushion materials include cushions materials comprising rubber as a principal component, and cushion materials obtained by integrating layers of heat-resistant fibers such as aromatic polyamide fibers or the like by needle punching.

These cushion materials made of rubber or integrated layers of heat-resistant fibers have generally proven durable under repeated use at high temperatures and pressures. However, as a result of size reduction and high performance requirements in various electrical appliances used in the home, and as a result of the rapid proliferation, and reduction in size, of personal computers and other electronic equipment, increasingly severe requirements have been imposed on the physical properties of printed circuit boards.

Even though progress has been made in the development of improved cushion materials, it is an unwelcome reality that the cushioning effect of materials comprising rubber as a principal component deteriorates rapidly under repeated use at high temperatures and pressures. Thus, although such cushion materials initially exhibit very favorable cushioning characteristics, the deterioration of their physical properties brings about a risk of producing a defective laminate sheet. More recently, in the case of rubber-based cushion materials, properties that were not problematic in the prior art have become problematic as a result of increased requirements for quality and consistency brought about by increased numbers of interconnects between pins.

Felt-like cushions made by integrating layers of heat-resistant fibers by needle punching exhibited other problems. The felt-like cushions are durable under repeated use at high temperatures and pressures. However, in the formation of a board, resin flow in the article being formed causes a permanent recess to form in the cushion material. The cushioning effect decreases with use, and the application of pressure to the prepreg is gradually degraded. Small scale protrusions and recesses are produced. These small scale defects, which were not problematic in the past, are now problematic because of more strict quality requirements such as requirements associated with increased numbers of interconnects between pins. Where these strict quality requirements are imposed, felt-like cushion materials can have a relatively short useful life.

We have attempted to address the above problems by utilizing a cushion in the form of a composite structure in which an elastic member including voids was sandwiched between felts. However, problems were encountered in that the application of pressure was insufficiently uniform over the entire surface of the prepeg sheet. Excessive pressure acting at the points at which the interlacing threads of the ground fabric cross one another and produced an irregular topography on the circuit board when the cushion material was placed in direct contact with the prepeg without the benefit of a mirror plate. The non-uniformity of the product is characterized by so-called "knuckle marks".

US-A-4 461 800 discloses a press pad for a forming press which comprises a laminated core comprising at least one hard cushion layer disposed between two rigid sheets, and two soft cushion layers comprising porous elastic sheets bonded to respective surfaces of the laminated core, the hard cushion layer comprising at least one porous elastic sheet which is impregnated with a binder and which comprises a needle punched web.

Among the objects of this invention are the achievement of improved quality in the laminated product, the provision of a superior cushioning effect, uniformity in application of pressure, stability of temperature rise over a long period of time, and avoidance of product defects due to the ground fabric structure, in a cushioning material that comes into direct contact with a resin-containing prepreg.

With these aims in mind, the invention provides in one aspect thereof a heat-resistant cushion material for a forming press in accordance with claim 9.

The dispersed voids of the material enable the cushioning material to maintain a cushioning effect at a sufficient level over a long time, and with felt-like cushion materials disposed on both sides of the core member the rate of temperature rise can be controlled by adjustment of the weight of the heat-resistant cushion.

In another aspect, the invention provides a heat-resistant cushion material for a forming press in accordance with claim 1. A heat-resistant sheet, such as a heat-resistant paper, a heat-resistant woven fabric, or a heat-resistant film, may be secured to the surface of the core only, or to both the surface of the felt-like cushion material and the surface of the core.

The core of a heat-resistant cushion material expands in thickness with rising temperature in the course of hot-forming a resin containing prepreg, and voids in the core are retained. Therefore, the heat-resistant cushion material can maintain uniform application of pressure to the prepreg for a long time with excellent cushioning effect, to produce a laminated sheet of high quality. Furthermore, since the felt-like cushion material has many voids, and its weight can be adjusted to control heat transfer, the cushion material is capable of correcting non-uniformity of temperature across a hot plate and transmitting heat to the prepreg uniformly.

An elastic member having a glass transition temperature at room temperature (e.g., about 20°C) or below may be used as a core, and the core member is thereby maintained in a soft state over the entire temperature range encountered in the forming process. Therefore, the heat-resistant cushion material can transmit uniform pressure across the entire surface of a forming prepreg (B stage), absorbing protrusions, recesses, deformations, variations in thickness and the like of a hot plate or mirror.plate, over a long period of time.

The core member is formed of sponge-like rubber having dispersed voids in the form of closed, independent cells, or closed, consecutive cells, of a thermoplastic elastomer having dispersed voids, (i.e. a porous thermoplastic elastomer), or of a resin-treated article made by impregnating heat-resistant woven fabric or heat-resistant non-woven fabric with a resin so that voids are retained. The cushioning effect achieved by the use of a core member so formed is superior to that achieved with a conventional rubber core having no voids. Furthermore, when a resin-treated, heat-resistant woven or non-woven fabric is used as a core member, the cushioning effect is superior to that of a conventional felt-like cushion, and is stable and can be maintained for a long time. The cells which constitute the voids in a core member are not crushed in a press forming process carried out at low pressure. Therefore, either independent or consecutive cells can be used. However, at higher pressures, independent cells are preferred.

Felt-like cushion materials obtained by needle-punch integration of batt fiber layers, wherein the main raw material is a fiber such as a heat-resistant aromatic polyamide fiber, may be used to sandwich a core member. The cushion thus produced exhibits improved product uniformity since the material will exhibit superior cushioning characteristics under conditions of changing temperature and pressure.

The felt-like cushion layers may be adhered to the core member in several ways. A core member consisting of sponge-like rubber in an unvulcanized state can be adhesion-treated and vulcanized simultaneously in a flat bed press. In the case in which the rubber core member is already vulcanized, or the core member consists of a resin-impregnated woven or non-woven fabric containing voids, adhesion of the felt-like cushion layers to the core member can be effected by press-forming, using a heat-resistant adhesive sheet.

A heat-resistant sheet comprising heat-resistant paper, a heat-resistant woven fabric, or a heat-resistant non-woven fabric, may be made to adhere onto surfaces of the felt-like cushion materials using a heat-resistant adhesive or, by using hot pressing, taking advantage of a self-adhesion property of the sheet. The heat-resistant sheet is air-impermeable, and consequently makes it possible to handle the felt-like cushion material using suction, thereby saving labor. The heat-resistant sheets also avoid exposure of downy surfaces of the felt layers and loss of fibers therefrom.

Other objects, details and advantages of the invention will be apparent from the following detailed description when read in conjunction with the drawings.

### Brief Description of the Drawings

FIG. 1 is a schematic sectional view of a heat-resistant cushion material in accordance with a first embodiment of the invention;
FIG. 2 is a schematic sectional view of a heat-resistant cushion material in accordance with a second embodiment of the invention;
FIGs. 3(a) and 3(b) are schematic sectional views illustrating two further embodiments of a heat-resistant cushion material, wherein a heat-resistant external sheet is bonded to one or both felt-like cushion layers on opposite sides of a heat-resistant, unvulcanized rubber core with closed cells;
FIGs. 4(a) and 4(b) are schematic sectional views illustrating two further embodiments of a heat-resistant cushion material, wherein a heat-resistant external sheet is bonded to one or both felt-like cushion layers on opposite sides of a core comprising a resin-impregnated, heat-resistant, woven fabric with dispersed voids;
FIG. 5 is a schematic sectional view illustrating an embodiment of the invention incorporating external mirror plates;
FIG. 6 is a schematic sectional view illustrating another embodiment of the invention in which a prepreg may be placed directly on a felt-like cushion material without an interposed mirror plate;
FIG. 7(a), 7(b) and 7(c) are exploded schematic sectional views illustrating, for each of three embodiments of the invention, the several layers before the layers are joined together; and
FIG. 8 is a schematic sectional view of a conventional cushion material for a forming press.

### Detailed Description

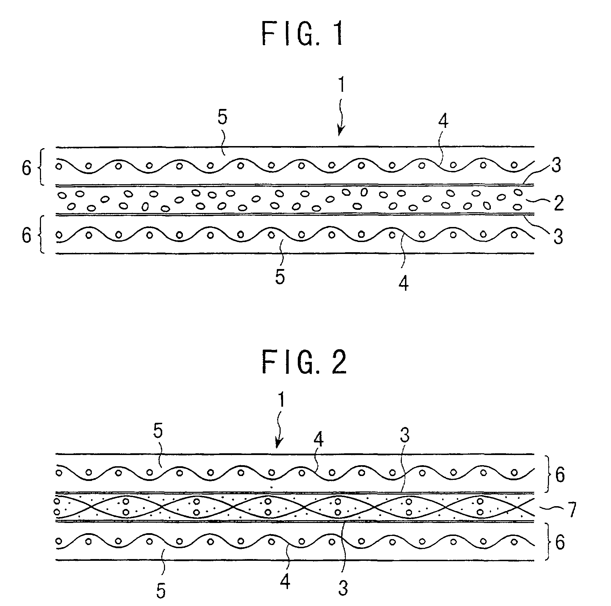

The core of the heat-resistant cushion material of FIG. 1 is an elastic member 2, which is preferably a sponge-like, heat-resistant rubber having dispersed voids. The glass transition temperature of the rubber of the elastic member 2 is preferably room temperature (approximately 20°C) or below, and the rubber is preferably one which expands in thickness upon a rise in temperature in the course of hot forming. The dispersed voids can be independent cells and/or closed, consecutive cells. As an alternative to a heat-resistant rubber, a heat-resistant, thermoplastic elastomer may be used.

Heat-resistant adhesive tapes 3 are disposed on both sides of the elastic member 2, and felt-like cushion layers 6 are secured on both sides of the core by the tapes 3. Each felt-like cushion layer comprises a heat-resistant ground fabric 4 and a batt fiber layer 5. The main raw material of the batt fiber layer is heat-resistant fibers such as aromatic polyamide fibers or the like.

In the cushion material of FIG. 2, the core 7 is a heat-resistant, woven or non-woven fabric incorporating a resin, the resin having dispersed voids, and a glass transition at room temperature or below. The core expands in thickness upon a rise in temperature in the course of hot forming. Heat-resistant adhesive tapes 3 are disposed on both sides of the core 7, and felt-like cushion material layers 6 are secured to the core by the tapes. Each felt-like cushion material layer includes a ground fabric 4 and a batt fiber layer 5. The main raw material of the batt fiber layer is heat-resistant fibers such as aromatic polyamide fibers or the like.

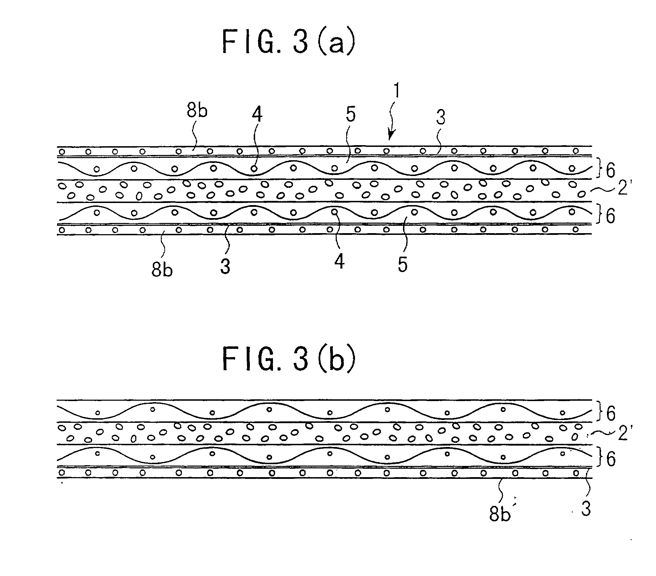

In FIGs. 3(a) and 3(b), an elastic core 2' which may be, for example, an unvulcanized, heat-resistant rubber of sponge-like consistency, having closed cells forming dispersed voids, having a glass transition at room temperature or below, and which expands in thickness with rising temperature in the course of hot forming. Felt-like cushion layers 6 are secured directly to both sides of the core, being adhered to the core by press forming the three layers in a sandwich while simultaneously vulcanizing the core. Here as in the preceding examples, the felt-like cushion layers are composed of a ground fabric 4 and a batt fiber layer 5. The main raw material of the batt fiber layer is heat-resistant fibers such as aromatic polyamide fibers or the like. In the case of FIG. 3(a), heat-resistant adhesive sheets 3 are disposed on the outwardly facing surfaces of the felt-like cushion layers 6, and heat-resistant, non-woven fabric layers 8b are secured to the cushion layers 6 by the adhesive sheets. In the embodiment shown in FIG. 3(b), the heat-resistant, non-woven fabric layer 8b is bonded to only one of the felt-like cushion layers 6.

An elastic core member 2 having the aforementioned properties, i.e., a glass transition at room temperature or below, expansion in thickness upon a temperature rise, and including dispersed voids, needs to be durable at the temperatures encountered in hot forming. Materials for the elastic member 2 which are sufficiently durable at such temperatures include polymers, copolymers, and mixtures thereof selected from the group consisting of styrene, butyl, nitrile, chloroprene, ethylenepropylene, chlorosulfonated polyethylene, urethane, acryl, epichlorhydrin, EPDM (ethylene propylene diene methylene), hydrogenated acryl, ethylene acryl, fluoro acryl, silicone, modified silicone and fluorine.

A sponge-like, heat-resistant rubber including closed cells, should have a thickness in the range from 0.5 to 5 mm, and a void volume in the range from 5% to 80% of the total volume. Preferably, the void volume should be in the range from 10% to 60%. These parameters are selected by taking into account the required cushioning effect, the precision of the thickness of the hot plate and prepreg, and the desired precision in the thickness of the copper clad laminate to be formed. When the void volume is less than 5%, the core member has poor uniformity in its application of pressure, since its material cannot absorb variations in thickness on its own. On the other hand, when the void volume exceeds 80%, deformation of the rubber is excessively large in relation to the pressure applied. In either case it is not possible to achieve a good result.

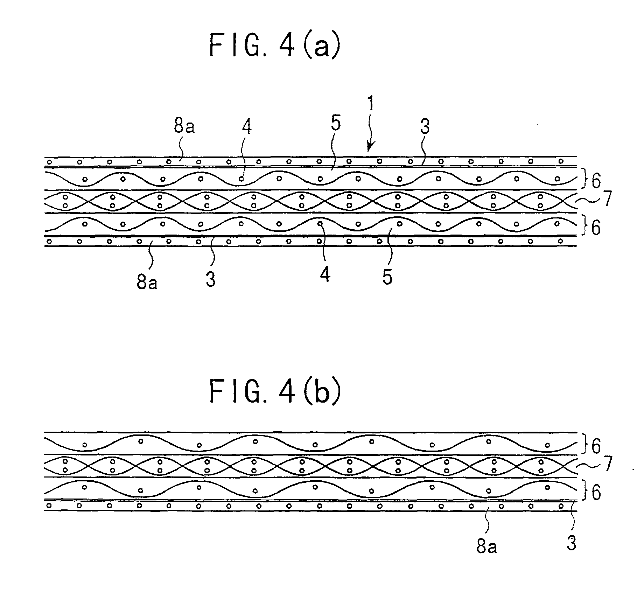

In the heat-resistant cushion of FIGs. 4(a) and 4(b) the core 7 is composed of a resin-impregnated, heat-resistant, woven or non-woven fabric having dispersed voids. The glass transition temperature of the resin is room temperature or below, and the core expands in thickness with increasing temperature in the course of hot forming.

Felt-like cushion materials 6 are secured to both sides of the core 7 in FIG. 4(a). The cushion materials, which are composed of a heat-resistant ground fabric 5 and a batt fiber layer 5 the main raw material of which is a heat resistant fiber such as an aromatic polyamide fiber or the like. The cushion 6 are secured to the core by adhesive sheets 3 disposed on surfaces of the cushion materials, and heat-resistant woven fabric layers 8a are secured on the outside surfaces of the cushion materials. The cushion materials 6 are secured in place on both sides of the core by press forming the entire structure as a sandwich, while simultaneously vulcanizing the core material.

In the case of FIG. 4(b), the heat-resistant, woven sheet 8a is bonded to one side of the structure, i.e. to only one of the felt-like cushion layers 6.

As in the case of FIGs. 3(a) and 3(b), the resin component of the core is preferably composed of a durable elastic polymer, copolymer, or mixture selected from the group consisting of styrene, butyl, nitrile, chloroprene, ethylenepropylene, chlorosulfonated polyethylene, urethane, acryl, epichlorhydrin, EPDM, hydrogenated acryl, ethylene acryl, fluoro acryl, silicone, modified silicone and fluorine. Among these, ethylene acryl is preferable from the standpoint of heat resistance and cost.

The principal requirement of the heat-resistant woven or non-woven fabric of the core member is that it be made of heat-resistant fibers usable for a long time in a stable manner under the conditions of high temperature and high pressure encountered in a forming press. For example, in the case of a glass fiber cloth-based epoxy laminated sheet the temperature may be in the range from 180°C to 210°C, and the pressure may be in the range from 30 Kg/cm² to 50 Kg/cm². In the case of a paper-based phenolic resin laminated sheet, the temperature may be in the range from 160°C to 190°C, and the pressure may be in the range from 80 Kg/cm² to 120 Kg/cm². Heat-resistant fibers suitable for use in the core member are preferably selected from among aliphatic polyamide fibers, polyethylene terephthalate fibers, polyphenylene sulfite fibers, poly (ether ether ketone) fibers and aromatic polyamide fibers.

The heat-resistant woven or non-woven fabric preferably has an areal weight (Metsuke) in the range from 100 g/m² to 5000 g/m², i.e. grams per square meter of fabric, and a thickness in the range from 0.1 to 5 mm. The weave in the case of a woven fabric may be a plain weave or a twill weave. The dry weight of the resin is calculated based on a specific weight of resin such that its void content is in the range from 5% to 80%. These parameters are selected by taking into account the required cushioning effect, the desired precision in the thickness of the hot plate and prepreg, and the desired precision in a copper clad laminate to be molded.

The main raw materials of the heat-resistant ground fabric 4 and the batt fiber layer 5 forming the felt-like cushion material 6 are likewise required to be usable for a long time in a stable manner under the conditions of high temperature and high pressure encountered in a forming press. The heat-resistant fibers of the cushion material are likewise preferably selected from among aliphatic polyamide fibers, polyethylene terephthalate fibers, polyphenylene sulfite fibers, poly (ether ether ketone) fibers and aromatic polyamide fibers.

The felt-like cushions 6 are prepared by stacking batt fiber layers 5 on both sides of a layer of heat-resistant ground fabric to a grammage preferably in the range of about 100 g/m² to about 5000 g/m², and integrating the stacked layers into one body by needle punching to a final thickness in the range from 0.5 mm to 25 mm. A felt-like cushion produced in this manner is durable under repeated operations at high temperature in a hot press. It does not suddenly deform, become feeble or flatten, and is therefore stable and capable of extended use.

There is no specific limitation on the heat-resistant adhesive sheet 3 disposed on a face of one or both felt-like cushions in order to hold a heat-resistant, woven or non-woven outer fabric layer 8a or 8b in place. However, the adhesive sheet 3 preferably exhibits no tackiness at room temperature, becomes adhesive when heated, and loses its adhesive character when cured. For example, the adhesive sheet may include any of various resins including a thermoset resin such as urethane resin, phenolic resin, epoxy resin, melamine resin, unsaturated polyester resin or silicone resin. If the heat-resistant adhesive sheet is excessively thick, spaces in the felt may be occupied by resin and the cushioning effect of the felt is reduced. Therefore, the sheet should be sufficiently thick to achieve the required adhesion, but not so thick as to materially impair the cushioning effect of the felt-like cushion material to which it is applied. To achieve these objectives, the thickness of the sheet 3 is preferably from 50 µm to 200 µm, and its areal weight (Metsuke) is preferably in the range from 100 to 300 g/m².

The material of the heat-resistant, woven fabric 8a has no specific limitation, so long as it exhibits heat resistance and durability at the forming temperature. The material can be selected from aliphatic polyamide fibers, polyethylene terephthalate fibers, polyphenylene sulfite fibers, poly (ether ether ketone) fibers and aromatic polyamide fibers.

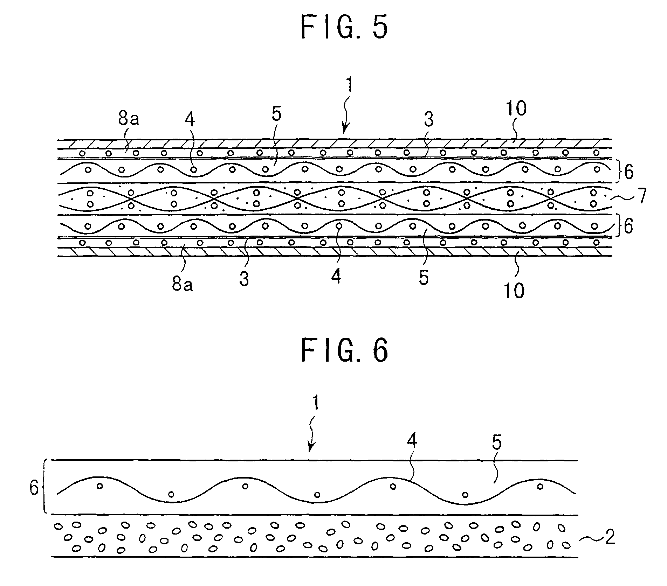

FIG. 5 illustrates a cushion material corresponding to that of FIG. 4(a), in which metallic plates 10 are attached to the woven fabric layers 8a for the purpose of automatic conveyance. The density, i.e., the porosity, of the woven fabric 8a should be such that the metal plates do not separate from the fabric layers during use. In the case in which the woven fabric layers 8a are present to prevent a downy surface of the felt-like materials from being exposed, it is important that the areal weight and structure of the fabric layer 8a be such as to prevent resin from seeping out to the outer surface. On the other hand, in the case where metal plates are present, avoidance or resin seepage is not necessary. Seepage of resin is not only tolerable but desirable, and a woven fabric or a non-woven fabric such as a needled felt, having a relatively low areal weight, can be used. The thickness of the heat-resistant adhesive sheets 3 can also be adjusted to ensure that the metal plates are adequately secured to the outer faces of the woven or non-woven fabric layers.

Securing the felt-like cushion materials 6 to the heat-resistant woven fabric 8a to each other with the heat-resistant adhesive sheet interposed therebetween is carried out by thermal compression utilizing a hot roll or hot plate press. The temperature should be maintained in the range of 100°C to 250°C, and the pressure should be such as to result in a felt density from 0.6 g/cm³ to 0.7 g/cm³. In the case of a hot roll, the traveling speed should be in the range of about 0.5 to 5 m/min.

FIG. 6 illustrates a case in which a resin-containing prepreg such as a circuit board would be placed directly on the felt-like cushion material without a metallic plate interposed between the cushion material and the prepreg. The core member 2, which is an elastic material having dispersed voids is provided on one surface of the felt-like cushion material, and the cushion material is made flat on the forming surface, i.e. the face which engages the prepreg.

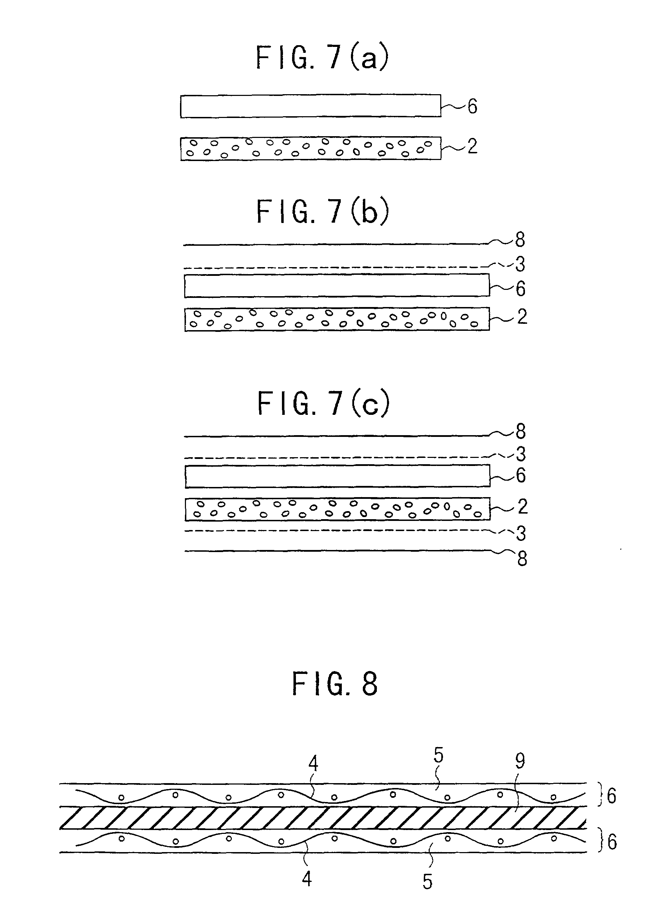

FIG. 7(a) illustrates a case in which the felt-like cushion material 6 and an elastic member 2, including dispersed voids, are combined. FIG. 7(b) illustrates a case in which the felt-like cushion material 6 and an elastic member 2 having dispersed voids are combined, and a surface layer 8 of heat-resistant sheet material is provided on a surface of the felt-like cushion material with a heat-resistant sheet 3 interposed therebetween. Fig. 7(c) illustrates a case in which a heat-resistant sheet material 8 is joined to both surfaces of the cushion, i.e. to a face of the elastic member 2 as well as to a face of the felt-like material 6, by heat-resistant adhesive sheets 3.

In FIG. 8, which illustrates a conventional heat-resistant cushion material for a forming press, a void-free rubber member 9 is sandwiched between a pair of felt-like cushion layers 6 which are made integral at the time of vulcanization of the rubber. The felt-like cushion material 6 comprises a heat-resistant ground fabric 4 and a heat-resistant batt layer 5, integrated by needle punching.

The invention will be further illustrated by the following examples.

### EXAMPLE 1

A sponge-like rubber material was composed of ethylene acryl in an unvulcanized state, having a thickness of 1.5 mm, and areal weight (Metsuke) of 930 g/m², and including independent closed cells, the void content being 40%. The voids in the ethylene acryl material were dispersed. Its glass transition temperature was room temperature or below, and it expanded in thickness upon a rise of temperature in the course of hot forming.

Webs of meta-aromatic polyamide fibers were stacked on respective ground fabrics made of meta-aromatic polyamide fibers, each having a grammage of 100 g/m², and the stacked structure was integrated into one body by needle punching to prepare two felt-like cushion layers each having an areal weight (Metsuke) of 400 g/m² and a thickness of 1.6 mm. The felt-like cushion layers were then disposed on both sides of the sponge-like rubber material to form a sandwiched composite. The composite was pressed in a flat bed press at 200°C and 10 Kg/cm², for 30 minutes so that its components adhered to one another, and simultaneously vulcanization of the sponge-like layer was carried out in the press. The resultant product was a heat-resistant cushion material in accordance with the invention for use in a forming press.

### EXAMPLE 2

A sponge-like rubber material was composed of fluoro acryl, having a thickness of 1.5 mm, and areal weight (Metsuke) of 1300 g/m², and including independent closed cells, the void content being 40%. The voids in the fluoro acryl rubber material were dispersed. Its glass transition temperature was room temperature or below, and it expanded in thickness upon a rise of temperature in the course of hot forming.

Webs of meta-aromatic polyamide fibers were stacked on respective ground fabrics made of meta-aromatic polyamide fibers, each having a grammage of 100 g/m², and the stacked structure was integrated into one body by needle punching to prepare two felt-like cushion layers each having an areal weight (Metsuke) of 400 g/m² and a thickness of 1.6 mm. The felt-like cushion layers were then disposed on both sides of the sponge-like rubber material to form a sandwiched composite, after inserting thermoset urethane films having an areal weight (Metsuke) of 100 g/m² between the felt-like layers and the rubber material. These films exhibited no tackiness at room temperature, but exhibited adhesiveness when heated between the rubber material and the felt-like cushion layers. The composite was pressed in a hot press roll at 200°C at a travel speed of 0.5 m/min to produce a heat-resistant cushion material in accordance with the invention for use in a forming press.

### EXAMPLE 3

A sponge-like rubber material was composed of ethylene acryl rubber in a vulcanized state, having a thickness of 1.5 mm, and areal weight (Metsuke) of 1250 g/m², and including independent closed cells, the void content being 20%. The voids in the ethylene acryl material were dispersed. Its glass transition temperature was room temperature or below, and it expanded in thickness upon a rise of temperature in the course of hot forming.

Webs of meta-aromatic polyamide fibers were stacked on respective ground fabrics made of meta-aromatic polyamide fibers, each having a grammage of 100 g/m², and the stacked structure was integrated into one body by needle punching to prepare two felt-like cushion layers each having an areal weight (Metsuke) of 750 g/m² and a thickness of 3.0 mm. The felt-like cushion layers were then disposed on both sides of the sponge-like rubber material with thermoset urethane films having an areal weight (Metsuke) of 100 g/m² between the rubber material and the cushion layers. Woven fabrics of meta aromatic polyamide fibers were placed on the outer sides of the felt-like cushion layers and again urethane films having an areal weight of 100 g/m² were inserted between the felt-like materials and the woven fabrics. The urethane film exhibits adhesiveness when heated, but no tackiness at room temperature. The composite was pressed in a flat bed press at 200°C and 10 Kg/cm², for 30 minutes so that its components adhered to one another, and simultaneously vulcanization of the sponge-like rubber layer was carried out in the press. The resultant product was a heat-resistant cushion material in accordance with the invention for use in a forming press.

### EXAMPLE 4

To prepare a core, fluoro acryl having a glass transition at room temperature or below, and having the property that it expands in thickness with increasing temperature in hot forming, was attached to a triple weave woven fabric of meta-aromatic polyamide fibers, the fabric having an areal weight (Metsuke) of 1100 g/m². The void content of the core was 40%. Webs of meta-aromatic polyamide fibers were stacked on ground fabrics made of meta-aromatic polyamide fibers, each having a grammage of 100 g/m². Each of the stacked structures was integrated into a body by needle punching to prepare two felt-like cushion layers, each having an areal weight (Metsuke) of 500 g/m² and a thickness of 2.0 mm. The felt-like cushion layers were disposed on both sides of the core to form a sandwich. Woven fabrics made of meta-aromatic polyamide fibers were then placed on the outer sides of the felt-like cushion layers with urethane films inserted between the core and the felt-like layers. The urethane films had an areal weight (Metsuke) of 100 g/m², and exhibited no tackiness at room temperature, but adhesiveness when heated. The composite was pressed in a flat bed press to adhere the layers to one another while vulcanizing the core material, at a temperature of 200°C and a pressure of 10 Kg/cm² for 30 minutes to produce a heat-resistant cushion material.

### EXAMPLE 5

A sponge-like rubber material was composed of unvulcanized ethylene acryl having a thickness of 1.5 mm, and areal weight (Metsuke) of 1240 g/m², and independent, closed cells constituting dispersed voids, the void content being 20%. The glass transition temperature of the ethylene acryl was room temperature or below, and it expanded in thickness upon a rise of temperature in the course of hot forming.

Webs of meta-aromatic polyamide fibers were stacked on a ground fabric made of meta-aromatic polyamide fibers, having a grammage of 100 g/m², and the stacked structure was integrated into one body by needle punching to prepare one felt-like cushion layer having an areal weight (Metsuke) of 1500 g/m² and a thickness of 3.0 mm. The felt-like cushion layer was then disposed on one side of the sponge-like rubber material. The composite was pressed in a flat bed press at 200°C and 10 Kg/cm², for 30 minutes so that its components adhered to one another, and simultaneously vulcanization of the sponge-like rubber layer was carried out in the press. The resultant product was a heat-resistant cushion material in accordance with the invention for use in a forming press.

### COMPARATIVE EXAMPLE 1

A cushion material was made of ethylene acryl rubber after vulcanization. The ethylene acryl material had no voids, a thickness of 4.0 mm and an areal weight (Metsuke) of 4100 g/m².

### COMPARATIVE EXAMPLE 2

A felt-like cushion material was prepared by stacking webs of meta-aromatic polyamide fibers on both sides of a ground fabric made of meta-aromatic polyamide fibers and having a grammage of 100 g/m². The stacked structure was integrated into one body by needle punching to prepare a felt-like cushion material having an areal weight (Metsuke) of 1600 g/m² and a thickness of 6.0 mm.

### COMPARATIVE EXAMPLE 3

Felt-like cushion materials were prepared by stacking webs of meta-aromatic polyamide fibers on both sides of ground fabrics made of meta-aromatic polyamide fibers and having a grammage of 100 g/m². Each stacked structures was integrated into one body by needle punching to prepare two felt-like cushions each having an areal weight of (Metsuke) of 550 g/m² and a thickness of 2.2 mm. The cushion layers were disposed on both sides of a layer of unvulcanized ethylene acryl rubber having a thickness of 1.5 mm and an areal weight (Metsuke) of 1550 g/m² and no voids. The sandwiched composite was pressed in a flat bed press at 200°C and 10 Kg/cm², for 30 minutes so that its components adhered to one another, and simultaneously vulcanization of the sponge-like rubber layer was carried out in the press.

A performance evaluation was conducted on the cushion materials in accordance with the above examples, Examples 1-5 corresponding to embodiments of the invention, and the comparative examples 1-3 corresponding to prior art cushion materials. The results are depicted in the following table:

| | | WORKING EXAMPLES | | | | | COMPARATIVE EXAMPLES | | |
|---|---|---|---|---|---|---|---|---|---|
| EXAMPLE | | 1 | 2 | 3 | 4 | 5 | 1 | 2 | 3 |
| PRESSURE COMPRESSION µM | | 140 | 140 | 180 | 160 | 185 | 0 | 150 | 110 |
| HEAT EXPANSION µM | | 60 | 60 | 68 | 60 | 70 | 200 | 0 | 75 |
| TEMPERATURE RISING SPEED | | 3.0 | 3.0 | 3.0 | 3.0 | 3.0 | 3.0 | 3.0 | 3.0 |
| STANDARD DEVIATION OF SHEET THICKNESS | | 0.08 | 0.08 | 0.06 | 0.06 | 0.07 | 0.19 | 0.17 | 0.16 |
| APPEARANCE | CENTRAL PORTION | ○ | ○ | ○ | ○ | ○ | × | Δ | Δ |
| | EDGE PORTION | ○ | ○ | ○ | ○ | ○ | × | Δ | Δ |

In the table,
"Pressure compression" refers to a change in thickness of a cushion material when the pressure applied to it is changed from 7to 20 Kg/cm².
"Heat expansion" refers to a change in thickness of a cushion material when the temperature is changed from 30°C to 120°C. "Temperature rising speed" is a value obtained by dividing the temperature difference between 90°C and 140°C by the time consumed during a temperature change from 90°C to 140°C.
"Standard deviation of sheet thickness" refers to a standard deviation calculated from a set of measurements of thickness of a forming article having a size of 1m x 1m at 81 points thereon at intervals of 10 cm.
The "appearance" symbols have the following meanings:
- ○: means "having no protrusions, recesses or voids."
- ×: means "having some protrusions and recesses, but no voids."
- Δ: means "having protrusions, recesses and voids."

From the above-tabulated test results, it will be seen that, when a material having a proper void content is used as a core member, a cushioning effect can be retained with changes in both pressure and temperature.

According to the invention, a material having a thermally expansive action is combined with a felt body, a synergy is realized between the cushioning effect associated with pressure compression and the cushioning effect due to expansion by heating, with the result that physical strains in a hot plate, a SUS plate and a prepreg can be absorbed more efficiently, thereby improving quality of the formed article.

An expansive body having no voids produces no compressive action when it is not deformed in the X and Y directions. Consequently, there is a limitation on its ability to apply pressure uniformly. On the other hand, when a material exerting thermal expansion has a proper void content, the voids are proportionally deformed under excessively large pressures. Both a thermal expansion and a compressive action take place in the material, an consequently uniform application of pressure can be realized during press forming. Furthermore, when a thermally expansive body includes voids, the body absorbs thickness variations of its own, thereby enabling more uniform application of pressure.

By the above-described actions, a formed article having a high thickness precision can be obtained, which cannot be achieved through the use of a felt by itself or through the use of a felt in combination with a voidless thermally expansive body. The invention is especially desirable in view of the trend toward thinner laminated sheets, which have stricter requirements for precision in thickness.

In summary, the presence of voids in the cushion material allows the cushion material to be compressed in such a way as to achieve more uniform application of pressure, especially where excessively large pressures are imposed in the forming process, in which heat and pressure are applied simultaneously. In the case of a cushion material that comes into direct contact with a resin-containing prepreg such as a circuit board or the like without a mirror plate interposed therebetween, the invention avoids the application of excessive pressure at the interlacing points of the threads in a ground fabric, and eliminates the reproduction of the ground fabric pattern as an irregular topography on the product.

A heat-resistant sheet of paper, woven fabric or film is secured to the surface of the felt-like cushion material, the core, or both, prevents migration of air, and makes it possible to transport the cushion material using automated equipment. The thermally expanding core member, which expands when heat and pressure are applied in use, achieves improved uniformity in the application of pressure where an excessively small pressures is imposed. Since the cushion material is used at temperatures exceeding room temperature, stable performance over a wide temperature range, covering all conditions of usage, is achieved by the adoption of a core having a glass transition at room temperature or lower. By the use of a woven or non-woven fabric as a component of the thermally expansive core, improved dimensional stability under conditions of use can be imparted to the core. Covering the core with a felt layer improves the durability of the core under conditions of usage. By adhering the core and the felt-like cushion material together, the handling of the cushion is significantly improved.

In the present specification "comprise" means "includes or consists of" and "comprising" means "including or consisting of".

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A heat-resistant cushion material for a forming press, comprising a layer of felt-like cushion material (6) having opposite first and second surfaces and a core member (2, 2' or 7) formed on the first surface of the cushion material, the core member (2, 2' or 7) having a first surface in contact with the first surface of the cushion material (6) and an opposite second surface, **characterised in that** the layer of felt-like cushion material (6) comprises a ground fabric (4) woven from yarn material and a batt fiber layer (5) integrated by needle punching, and the core member (2, 2' or 7) is composed of an elastic material of a sponge-like rubber material or thermoplastic elastomer that includes dispersed voids in the form of closed, independent cells.

2. A heat-resistant cushion material according to claim 1, wherein the second surface of the felt-like cushion material (6) is flat and exposed, whereby said second surface of the felt-like cushion material constitutes a forming surface.

3. A heat-resistant cushion material according to claim 1, wherein a heat-resistant sheet (8a, 8b) is secured to at least one of said second surfaces.

4. A heat-resistant cushion material according to claim 1, wherein a second, felt-like cushion material (6) comprising plural components (4, 5) integrated by needle-punching is disposed on the second surface of the core (2, 2' or 7), whereby the core is sandwiched between the two felt-like cushion material (6).

5. A heat-resistant cushion material according to claim 1, wherein the core member (2, 2'or 7) is composed of a material that expands in thickness with rising temperature while retaining its dispersed voids, whereby the core member (2, 2' or 7) expands when the heat-resistant cushion material is used for hot-forming of a resin-containing prepreg.

6. A heat-resistant cushion material according to claim 1, wherein the elastic material of the core member (2, 2' or 7) has a glass transition temperature not exceeding room temperature.

7. A heat-resistant cushion material according to claim 1, wherein the core member (2, 2' or 7) and the felt-like cushion material (6) are secured together by thermal bonding, by an adhesive, or by a heat-resistant adhesive sheet.

8. A heat-resistant cushion material according to claim 1 wherein a heat-resistant sheet (8a, 8b) is secured to a surface of the felt-like cushion material (6) by a heat-resistant adhesive or by self-adhesion of the heat-resistant sheet under hot pressing.

9. A heat-resistant cushion material for a forming press comprising a core member (2, 2' or 7) sandwiched between felt-like cushion materials (6), **characterised in that** each of the felt-like cushion materials (6) comprises a ground fabric (4) woven from yarn material and a batt fiber layer (5) integrated by needle punching, and the core member (2, 2' or 7) is composed of an elastic material of a sponge-like rubber material or thermoplastic elastomer that includes dispersed voids in the form of closed independent cells.

## Patentansprüche

1. Hitzebeständiges Polstermaterial für eine Formpresse, das eine Lage aus filzartigem Polstermaterial (6) mit gegenüberliegenden ersten und zweiten Oberflächen und ein Kernteil (2, 2' oder 7), ausgebildet auf der ersten Oberfläche des Polstermaterials, umfaßt, wobei das Kernteil (2, 2' oder 7) eine erste Oberfläche in Kontakt mit der ersten Oberfläche des Polstermaterials (6) und eine gegenüberliegende zweite Oberfläche aufweist, **dadurch gekennzeichnet, daß** die Lage aus filzartigem Polstermaterial (6) ein Grundgewebe (4), das aus Garnmaterial gewoben ist, und eine Vliesfaserschicht (5), integriert durch Vernadelung, umfaßt und das Kernteil (2, 2' oder 7) aus einem elastischen Material aus einem schwammartigen Gummimaterial oder thermoplastischen Elastomer besteht, das verteilte Hohlräume in der Form geschlossener, unabhängiger Zellen einschließt.

2. Hitzebeständiges Polstermaterial nach Anspruch 1, **dadurch gekennzeichnet, daß** die zweite Oberfläche des filzartigen Polstermaterials (6) flach und offenliegend ist, wodurch besagte zweite Oberfläche des filzartigen Polstermaterials eine Formoberfläche darstellt.

3. Hitzebeständiges Polstermaterial nach Anspruch 1, **dadurch gekennzeichnet, daß** eine hitzebeständige Schicht (8a, 8b) an wenigstens eine von besagten zweiten Oberflächen gebunden ist.

4. Hitzebeständiges Polstermaterial nach Anspruch 1, **dadurch gekennzeichnet, daß** ein zweites, filzartiges Polstermaterial (6), das mehrere Komponenten (4, 5) umfaßt, die durch Vemadelung integriert sind, auf der zweiten Oberfläche des Kerns (2, 2' oder 7) angeordnet ist, wodurch der Kern sandwichartig zwischen den zwei filzartigen Polstermaterialien (6) liegt.

5. Hitzebeständiges Polstermaterial nach Anspruch 1, **dadurch gekennzeichnet, daß** das Kernteil (2, 2' oder 7) aus einem Material besteht, dessen Dicke bei ansteigender Temperatur expandiert, während es seine verteilten Hohlräume beibehält, wodurch das Kernteil (2, 2' oder 7) expandiert, wenn das hitzebeständige Polstermaterial für die Heißformung eines harzhaltigen Prepregs verwendet wird.

6. Hitzebeständiges Polstermaterial nach Anspruch 1, **dadurch gekennzeichnet, daß** das elastische Material des Kernteils (2, 2' oder 7) eine Glasübergangstemperatur besitzt, die Raumtemperatur nicht übersteigt.

7. Hitzebeständiges Polstermaterial nach Anspruch 1, **dadurch gekennzeichnet, daß** das Kernteil (2, 2' oder 7) und das filzartige Polstermaterial (6) miteinander durch thermische Bindung, durch einen Kleber oder durch eine hitzebeständige Kleberschicht miteinander verbunden sind.

8. Hitzebeständiges Polstermaterial nach Anspruch 1, **dadurch gekennzeichnet, daß** eine hitzebeständige Schicht (8a, 8b) an eine Oberfläche des filzartigen Polstermaterials (6) durch einen hitzebeständigen Kleber oder durch Selbstadhäsion der hitzebeständigen Schicht unter Heißpressen gebunden ist.

9. Hitzebeständiges Polstermaterial für eine Formpresse, das ein Kernteil (2, 2' oder 7) umfaßt, das sandwichartig zwischen filzartigen Polstermaterialien (6) liegt, **dadurch gekennzeichnet, daß** jedes der filzartigen Polstermaterialien (6) ein Grundgewebe (4), das aus Garnmaterial gewoben ist, und eine Vliesfaserlage (5), integriert durch Vemadelung, umfaßt und das Kernteil (2, 2' oder 7) aus einem elastischen Material aus einem schwammartigen Gummimaterial oder thermoplastischen Elastomer besteht, das verteilte Hohlräume in der Form geschlossener unabhängiger Zellen einschließt.

## Revendications

1. Matériau amortisseur résistant à la chaleur pour une presse à former, comprenant une couche de matériau amortisseur de type feutre (6) ayant des première et deuxième surfaces opposées et un organe de coeur (2, 2' ou 7) formé sur la première surface du matériau amortisseur, l'organe de coeur (2, 2' ou 7) ayant une première surface en contact avec la première surface du matériau amortisseur (6) et une deuxième surface opposée, **caractérisée en ce que** la couche du matériau amortisseur de type feutre (6) comprend un tissu de fond (4) tissé à partir d'un matériau de fil et une couche de nappage en fibre (5) intégrée par aiguilletage, et l'organe de coeur (2, 2' ou 7) est composé d'un matériau élastique d'un matériau en caoutchouc de type éponge ou d'un élastomère thermoplastique qui comprend des vides dispersés sous la forme d'alvéoles fermés indépendants.

2. Matériau amortisseur résistant à la chaleur selon la revendication 1, dans lequel la deuxième surface du matériau amortisseur de type feutre (6) est plate et exposée, afin que ladite deuxième surface du matériau amortisseur de type feutre constitue une surface de formation.

3. Matériau amortisseur résistant à la chaleur selon la revendication 1, dans lequel une feuille résistante à la chaleur (8a, 8b) est fixée à au moins l'une desdites deuxièmes surfaces.

4. Matériau amortisseur résistant à la chaleur selon la revendication 1, dans lequel un second matériau amortisseur de type feutre (6) comprenant plusieurs composants (4, 5) intégrés par aiguilletage est disposé sur la deuxième surface du coeur (2, 2' ou 7), afin que le coeur soit pris en sandwich entre les deux matériaux amortisseurs de type feutre (6).

5. Matériau amortisseur résistant à la chaleur selon la revendication 1, dans lequel l'organe de coeur (2, 2' ou 7) est composé d'un matériau qui se dilate en épaisseur avec l'élévation de température tout en maintenant ses vides dispersés, afin que l'organe de coeur (2, 2' ou 7) se dilate lorsque le matériau amortisseur résistant à la chaleur est utilisé pour un formage à chaud d'un préimprégné contenant une résine.

6. Matériau amortisseur résistant à la chaleur selon la revendication 1, dans lequel le matériau élastique de l'organe de coeur (2, 2' ou 7) a une température de transition vitreuse n'excédant pas la température ambiante.

7. Matériau amortisseur résistant à la chaleur selon la revendication 1, dans lequel l'organe de coeur (2, 2' ou 7) et le matériau amortisseur de type feutre (6) sont fixés ensemble par liaison thermique, par un adhésif, ou par une feuille adhésive résistante à la chaleur.

8. Matériau amortisseur résistant à la chaleur selon la revendication 1, dans lequel une feuille résistante à la chaleur (8a, 8b) est fixée à une surface du matériau amortisseur de type feutre (6) par un adhésif résistant à la chaleur ou par auto adhérence de la feuille résistante à la chaleur sous pressage à chaud.

9. Matériau amortisseur résistant à la chaleur pour une presse à former comprenant un organe de coeur (2, 2' ou 7) pris en sandwich entre les matériaux amortisseurs de type feutre (6), **caractérisé en ce que** chacun des matériaux amortisseurs de type feutre (6) comprend un tissu de fond (4) tissé à partir d'un matériau de fil et une couche de nappage en fibre (5) intégrée par aiguilletage, et l'organe de coeur (2, 2' ou 7) est composé d'un matériau élastique d'un matériau en caoutchouc de type éponge ou d'un élastomère thermoplastique qui comprend des vides dispersés sous la forme d'alvéoles fermés indépendants.
